# EUROPÄISCHE PATENTSCHRIFT

(11) **EP 0 699 561 B1**
(45) Veröffentlichungstag und Bekanntmachung des Hinweises auf die Patenterteilung: **12.04.2000**
(21) Anmeldenummer: 95113207.5
(22) Anmeldetag: 23.08.1995
(51) Int. Cl.: B60Q 1/26

(54) **Warnleuchte für Fahrzeuge**
Vehicle warning light
Feux d'avertissement pour véhicule

(30) Priorität: 30.08.1994 DE 4430702
(43) Veröffentlichungstag der Anmeldung: 06.03.1996
(73) Patentinhaber: Hella KG Hueck & Co., 59552 Lippstadt (DE)
(72) Erfinder: Schreckenberg, Franz-Josef, D-33178 Borchen (DE)

(56) Entgegenhaltungen:
- EP-A- 0 075 839
- DE-C- 4 140 821

## Beschreibung

Die Erfindung betrifft eine Warnleuchte für Fahrzeuge mit den Merkmalen:
- die Warnleuchte weist eine lichtdurchlässige Abdeckhaube auf, welche auf den Leuchtensockel aufgesetzt ist,
- der Leuchtensockel weist zum Aufstecken auf einen rohrförmigen Träger auf seiner Unterseite eine zentrale Aufnahmevorrichtung auf,
- innerhalb der lichtdurchlässigen Abdeckhaube ist um eine Glühlampe herum ein Reflektor drehbar angeordnet,
- der Reflektor ist mit dem Antriebsrad eines mit einem Elektromotor gekoppelten Getriebes verbunden und um eine Hülse verdrehbar gelagert,
- durch die Hülse hindurch verlaufen ein Kontaktstab und ein Kontaktstift zur Glühlampe hin,
- der Kontaktstift dient an der Unterseite des Leuchtensockels für einen Pol der Glühlampe als Steckanschluß,
- unterhalb des Antriebsrades verlaufen Anschlußteile, die einerseits mit dem Elektromotor und andererseits mit dem Kontaktstab und dem Kontaktstift verbunden sind.

Eine derartige Warnleuchte ist aus der DE 39 20 763 A1 vorbekannt. Bei dieser vorbekannten Warnleuchte ist als elektrische Kontaktierung des Anschlußteiles mit dem Kontaktstift eine Leiterbahn vorgesehen, aus der ein Leiterbahnabschnitt freigeschnitten ist, welcher eine Öffnung zur kämmenden Aufnahme des Kontaktstiftes aufweist.

Diese vorbekannte Lösung führt zwar zu einer guten elektrischen Kontaktierung zwischen dem Kontaktstift und der Leiterbahn. Diese Lösung kann jedoch bei der Montage durch den erforderlichen Kraftaufwand zum Hindurchstecken des Kontaktstiftes durch die Öffnung zu Problemen führen.

Die Erfindung hat die Aufgabe, eine Warnleuchte gemäß dem Oberbegriff des Anspruchs 1 dahingehend weiterzubilden, daß mit noch einfacheren Mitteln als beim Vorbekannten und mit noch größerer Montagesicherheit die elektrische Kontaktierung zwischen dem Anschlußteil und dem Kontaktstift hergestellt wird.

Diese Aufgabe wird erfindungsgemäß dadurch gelöst, daß die Hülse eine sichelförmige Freimachung aufweist, die den Kontaktstift umgibt und in der ein kreisbogenförmiger Fortsatz des ersten Anschlußteils klemmend angeordnet ist und die Hülse einen Schlitz aufweist, der an die sichelförmige Freimachung anschließt und durch den das erste Anschlußteil nach außen hindurchgeführt ist.

Anders als bei der vorbekannten Lösung wird die klemmende mechanische und damit elektrische Verbindung des ersten Anschlußteiles mit dem Kontaktstift nicht durch Hindurchstecken des Kontaktstiftes durch eine entsprechend enge Öffnung, sondern durch klemmendes Anlegen eines kreisbogenförmigen Fortsatzes des ersten Anschlußteiles an den Kontaktstift hergestellt.

Dazu weist erfindungsgemäß die Hülse im inneren, dem Kontaktstift zugewandten Bereich eine sichelförmige Freimachung auf, in der der kreisbogenförmige Fortsatz des ersten Anschlußteiles angeordnet ist. Erfindungsgemäß werden die Abmessungen der sichelförmigen Freimachung und des kreisbogenförmigen Fortsatzes so gewählt, daß der Kontaktstift bei der Montage in der Hülse nur mit entsprechendem Kraftaufwand an dem kreisbogenförmigen Fortsatz vorbeigeführt und damit der kreisbogenförmige Fortsatz federnd aus der Erstreckungsrichtung des Kontaktstiftes herausgebogen wird.

Erfindungsgemäß wird das erste Anschlußteil aus dem Inneren der Hülse heraus durch einen Schlitz in der Hülse herausgeführt, um das von dem kreisbogenförmigen Fortsatz abgewandte Ende des ersten Anschlußteiles in entsprechender Art und Weise mit dem Elektromotor elektrisch zu verbinden.

Die erfindungsgemäße Warnleuchte bietet gegenüber dem Vorbekannten den Vorteil einer nochmals vereinfachten und dabei sicheren elektrischen Kontaktierung zwischen dem Kontaktstift und dem ersten Anschlußteil. Dabei bleiben die Vorteile der vorbekannten Lösung, insbesondere der aufbauenden Montage, in vollem Umfang erhalten.

Vorteilhafte Ausgestaltungen und Weiterbildungen der erfindungsgemäßen Warnleuchte gehen aus den Unteransprüchen hervor.

So kann aus Gründen der Vereinfachung des erforderlichen Spritzwerkzeuges die sichelförmige Freimachung kreisringförmig erweitert sein. Die kreisringförmige Erweiterung bringt dabei keine weiteren Nachteile, da sich in dem funktionswichtigen Bereich des kreisbogenförmigen Fortsatzes die geometrischen Verhältnisse innerhalb der Hülse nicht ändern.

Um die elektrische Kontaktierung zwischen dem Kontaktstift und dem ersten Anschlußteil noch weiter zu verbessern, kann das erste Anschlußteil im Bereich des kreisbogenförmigen Fortsatzes eine Ausnehmung aufweisen, so daß der kreisbogenförmige Fortsatz mit mehreren gabelförmigen Zinken den Kontaktstift klemmend umgreift.

Das erste Anschlußteil kann auf der vom Fortsatz abgewandten Seite einen Flachsteckeranschluß für den Flachstecker des Elektromotores aufweist. Eine einfache und kostengünstige Kontaktierung zwischen dem zweiten Anschlußteil und dem Kontaktstab wird dadurch erzielt, daß das zweite Anschlußteil eine Ausnehmung zur klemmenden Aufnahme eines Endes des Kontaktstabes aufweist.

Zur elektrischen Verbindung des zweiten Anschlußteiles mit dem Elektromotor kann das zweite Anschlußteil einen insbesondere gedoppelten Flachsteckerbereich aufweisen. Durch die Doppelung des zweiten Anschlußteiles in diesem Bereich wird die Klemmung des Flachsteckers des Elektromotors auf dem Flachsteckerbereich zusätzlich verbessert.

Zur einfachen elektrischen Kontaktierung der Warnleuchte, auch mit dem zweiten Pol des rohrförmigen Trägers, auf dem die Warnleuchte befestigt wird, kann das zweite Anschlußteil einen U-förmigen Bereich aufweisen, der die Hülse im Bereich der Aufnahmevorrichtung umgreift. Durch die U-förmige Ausbildung des zweiten Anschlußteiles in diesem Bereich wird eine Beschädigung der Anschlußmittel und damit eine unsichere Kontaktierung auch bei mehrfachem Aufstecken und Abziehen der Warnleuchte von dem rohrförmigen Träger mit großer Wahrscheinlichkeit vermieden.

In diesem Zusammenhang kann das zweite Anschlußteil besonders vorteilhaft eine Bohrung aufweisen, durch die der Kontaktstift isoliert hindurchgesteckt ist, um einen Kurzschluß innerhalb der Warnleuchte zu vermeiden. Zur weiteren Verbesserung der elektrischen Kontaktierung zwischen der Warnleuchte und dem rohrförmigen Träger kann das zweite Anschlußteil in diesem Zusammenhang im U-förmigen Bereich ausgestellte Lappen aufweisen.

Ein Ausführungsbeispiel der erfindungsgemäßen Warnleuchte ist in den Zeichnungen dargestellt und wird im folgenden anhand der Zeichnungen näher erläutert:

Es zeigen
- Figur 1: einen mittleren vertikalen Längsschnitt durch die Warnleuchte für Fahrzeuge;
- Figur 2: einen Querschnitt durch die Warnleuchte mit der Schnittlinie A-A und
- Figuren 3 bis 6: verschiedene Ansichten des zweiten Anschlußteiles zur Darstellung der dort vorgesehenen Merkmale.

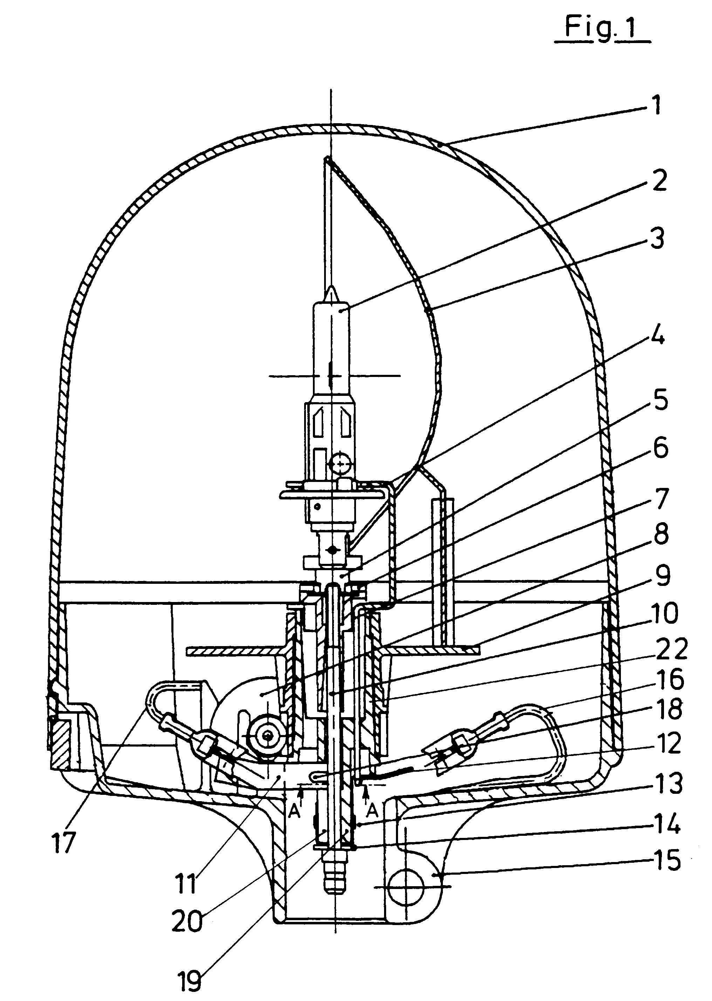

In der Figur 1 weist die dargestellte Warnleuchte eine lichtdurchlässige Abdeckhaube (1) auf, welche auf einem Leuchtensockel (15) aufgesetzt ist. Der Leuchtensockel (15) weist zum Aufstecken auf einen in den Figuren nicht dargestellten rohrförmigen Träger auf seiner Unterseite eine zentrale Aufnahmevorrichtung (13) auf.

Innerhalb der lichtdurchlässigen Abdeckhaube (1) ist um eine Glühlampe (2) herum ein Reflektor (3) drehbar angeordnet. Die Glühlampe (2) ist in einer Lampenfassung (4) angeordnet, die eine Kontaktfeder (5) aufweist. Die Kontaktfeder (5) ist elektrisch und mechanisch mit einem Kontaktstift (10) verbunden, der an der Unterseite des Leuchtensockels (15) für diesen einen Pol der Glühlampe (2) als Steckanschluß dient. Die Kontaktierung der Kontaktfeder (5) mit dem Kontaktstift (10) erfolgt über ein Führungsteil (6), das auf dem Kontaktstift (10) befestigt ist.

Der Reflektor (3) ist mit dem Antriebsrad (9) eines mit einem Elektromotor (8) gekoppelten Getriebes verbunden und um eine Hülse (19) verdrehbar gelagert. Durch die Hülse (19) hindurch verlaufen ein Kontaktstab (7) für den Masseanschluß der Glühlampe (2) und der Kontaktstift (10) zur Glühlampe (2) hin.

Unterhalb des Antriebsrades (9) verlaufen ein erstes Anschlußteil (11) für den Kontaktstift (10) und ein zweites Anschlußteil (12) für den Kontaktstab (7), die zur elektrischen Verbindung des Elektromotors (8) mit dem Kontaktstab (7) der Masse Verbindung hat und dem Kontaktstift (10), der die positive Versorgungsspannung leitet, herzustellen.

Das erste Anschlußteil (11) weist dabei auf der von der Hülse (19) abgewandten Seite einen Flachsteckanschluß für die positive Versorgungsspannungsleitung (17) des Elektromotors (8) auf. Auf der der Hülse (19) zugewandten Seite ist der erste Anschlußteil (11) mit einer Ausnehmung (18) versehen und ragt durch einen Schlitz (20) in der Hülse (19) in das Innere der Hülse (19) hinein.

Eine Masseleitung (16) des Elektromotors (8) ist mit dem zweiten Anschlußteil (12) elektrisch leitend verbunden, das einen U-förmigen Fortsatz aufweist. Zwischen dem zweiten Anschlußteil (12) und dem aufnahmevorrichtungsseitigen Ende des Kontaktstiftes (11) ist eine Isolierscheibe (14) zur elektrischen Isolierung des Masseanschlusses vom positiven Versorgungsspannungsanschluß vorgesehen.

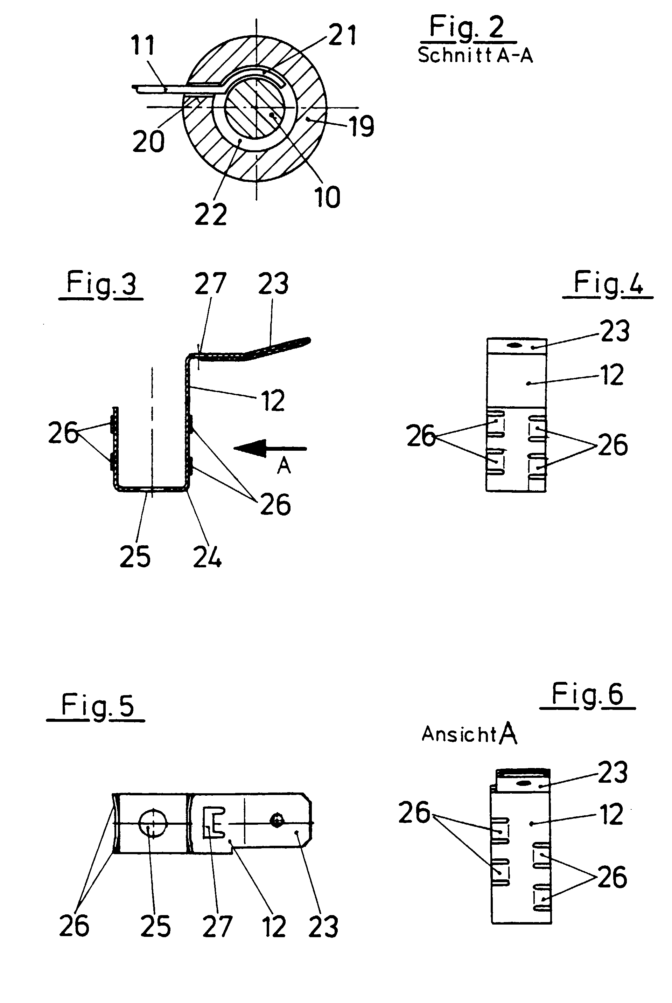

In der Figur 2 sind gleiche oder gleich wirkende Einrichtungsteile wie in der Figur 1 mit denselben Bezugszeichen versehen. Man erkennt in der Figur 2, daß die Hülse (19) neben dem Schlitz (20) eine sichelförmige Freimachung in ihrem Inneren aufweist, die zu einer ringspaltförmigen Freimachung (22) erweitert ist. Innerhalb dieser ringspaltförmigen Freimachung (22) befindet sich ein kreisbogenförmiger Fortsatz (21) des ersten Anschlußteiles (11), das durch den Schlitz (20) in der Hülse (19) hindurchgesteckt ist. Zwischen dem Kontaktstift (10) und der Wandung der Hülse (19) wird der in der ringspaltförmigen Freimachung (22) befindliche kreisbogenförmige Fortsatz (21) so ein- und festgeklemmt, daß die elektrische Kontaktierung zwischen dem ersten Anschlußteil (11) und dem Kontaktstift (10) sicher hergestellt wird. Hierzu ist bei der Fertigung der erfindungsgemäßen Warnleuchte kein besonders großer Kraftaufwand erforderlich, da der Kontaktstift (10) an dem kreisbogenförmigen Fortsatz (21) des ersten Anschlußteils (11) quasi vorbeigeführt wird.

In den Figuren 3 bis 6 sind gleiche oder gleichwirkende Einrichtungsteile wie in der Figur 1 mit denselben Bezugszeichen versehen. In diesen Figuren erkennt man, daß das zweite Anschlußteil (12) eine Ausnehmung (27) aufweist, die als U-förmiger Schlitz ausgebildet ist und die von dem sockelseitigen Ende des Kontaktstabes (7) klemmend durchdrungen wird. Hierdurch wird die elektrische Kontaktierung zwischen dem Kontaktstab (7) und dem zweiten Anschlußteil (12) hergestellt. Zum Anschluß der Masseleitung (16) für den Elektromotor (8) weist das zweite Anschlußteil (12) einen gedoppelten Flachsteckerbereich (23) auf.

Auf der dem Flachsteckerbereich (23) gegenüberliegenden Seite weist das zweite Anschlußteil (12) einen U-förmigen Bereich (24) auf, der wie aus der Figur 1 ersichtlich das aufnahmevorrichtungsseitige Ende der Hülse (19) umgreift. Zur Durchführung des Kontaktstiftes (10) durch den U-förmigen Bereich (24) des zweiten Anschlußteiles (12) weist dieser U-förmige Bereich (24) eine Bohrung (25) auf, die einen größeren Durchmesser aufweist als der Durchmesser des Kontaktstiftes (10) in diesem Bereich, um einen elektrischen Kurzschluß zwischen diesen Teilen zu vermeiden. Um die Kontaktierung der Warnleuchte an den U-förmigen Träger zusätzlich zu verbessern, sind ausgestellte Lappen (26) vorgesehen, die im U-förmigen Bereich (24) des zweiten Anschlußteiles (12) angeordnet sind.

### Bezugszeichenliste

### Warnleuchte für Fahrzeuge

- 1: Abdeckhaube
- 2: Glühlampe
- 3: Reflektor
- 4: Lampenfassung
- 5: Kontaktfeder
- 6: Führungsteil
- 7: Kontaktstab
- 8: Elektromotor
- 9: Antriebsrad
- 10: Kontaktstift
- 11: erstes Anschlußteil für 10
- 12: zweites Anschlußteil für 7
- 13: Aufnahmevorrichtung
- 14: Isolierscheibe
- 15: Leuchtensockel
- 16: Masseleitung für Motor 8
- 17: positive Versorgungsspannungsleitung für Motor 8
- 18: Ausnehmung in 1, Anschlußteil 11
- 19: Hülse, einstückig mit Leuchtensockel
- 20: Schlitz in der Hülse 19
- 21: kreisbogenförmiger Fortsatz
- 22: ringspaltförmige Freimachung
- 23: Gedoppelter Flachsteckerbereich von 12
- 24: U-förmiger Bereich von 12
- 25: Bohrung von 12
- 26: Ausgestellte Lappen von 12
- 27: Ausnehmung in 12 für 7

## Patentansprüche

1. Warnleuchte für Fahrzeuge mit den Merkmalen:
- die Warnleuchte weist eine lichtdurchlässige Abdeckhaube (1) auf, welche auf den Leuchtensockel (15) aufgesetzt ist,
- der Leuchtensockel (15) weist zum Aufstecken auf einen rohrförmigen Träger auf seiner Unterseite eine zentrale Aufnahmevorrichtung (13) auf,
- innerhalb der lichtdurchlässigen Abdeckhaube (1) ist um eine Glühlampe (2) herum ein Reflektor (3) drehbar angeordnet,
- der Reflektor (3) ist mit dem Antriebsrad (9) eines mit einem Elektromotor (8) gekoppelten Getriebes verbunden und um eine Hülse (19) verdrehbar gelagert,
- durch die Hülse (19) hindurch verlaufen ein Kontaktstab (7) und ein Kontaktstift (10) zur Glühlampe (2) hin,
- der Kontaktstift (10) dient an der Unterseite des Leuchtensockels (15) für einen Pol der Glühlampe (2) als Steckanschluß,
- unterhalb des Antriebsrades (9) verlaufen Anschlußteile (11, 12), die einerseits mit dem Elektromotor (8) und andererseits mit dem Kontaktstab (7) und dem Kontaktstift (10) verbunden sind,
dadurch gekennzeichnet, daß
- die Hülse (19) eine sichelförmige Freimachung (22) aufweist, die den Kontaktstift (10) umgibt und in der ein kreisbogenförmiger Fortsatz (21) des ersten Anschlußteils (11) klemmend angeordnet ist,
- die Hülse (19) einen Schlitz (20) aufweist, der an die sichelförmige Freimachung (22) anschließt und durch den das erste Anschlußteil (11) nach außen hindurchgeführt ist.

2. Warnleuchte nach Anspruch 1, dadurch gekennzeichnet, daß die sichelförmige Freimachung (22) kreisringförmig erweitert ist.

3. Warnleuchte nach Anspruch 1, dadurch gekennzeichnet, daß das erste Anschlußteil (11) im Bereich des kreisbogenförmigen Fortsatzes (21) eine Ausnehmung (18) aufweist.

4. Warnleuchte nach Anspruch 1, dadurch gekennzeichnet, daß das erste Anschlußteil (11) auf der vom Fortsatz (21) abgewandten Seite einen Flachsteckanschluß aufweist.

5. Warnleuchte nach Anspruch 1, dadurch gekennzeichnet, daß das zweite Anschlußteil (12) eine Ausnehmung (27) zur Aufnahme eines Endes des Kontaktstabes (7) aufweist.

6. Warnleuchte nach Anspruch 1, dadurch gekennzeichnet, daß das zweite Anschlußteil (12) einen insbesondere gedoppelten Flachsteckerbereich (23) aufweist.

7. Warnleuchte nach Anspruch 1, dadurch gekennzeichnet, daß das zweite Anschlußteil (12) einen U-förmigen Bereich (24) aufweist, der die Hülse (19) im Bereich der Aufnahmevorrichtung (13) umgreift.

8. Warnleuchte nach Anspruch 7, dadurch gekennzeichnet, daß das zweite Anschlußteil (12) eine Bohrung (25) aufweist, durch die der Kontaktstift (10) isoliert hindurchgesteckt ist.

9. Warnleuchte nach Anspruch 7, dadurch gekennzeichnet, daß das zweite Anschlußteil (12) ausgestellte Lappen (26) aufweist.

## Claims

1. Warning light for vehicles having the following features:
- the warning light has a light transmitting cover hood (1) mounted on the lamp base (15),
- the lamp base (15) has a central receptor device (13) on its underside for plugging into a tubular carrier,
- a reflector (3) is arranged within the light transmitting cover hood (1) for rotation about a light bulb (2),
- the reflector (3) is connected to the drive wheel (9) of a transmission coupled to an electric motor (8) and is mounted for rotation about a bush (19),
- a contact bar (7) and a contact rod (10) extend through the bush (19) to the light bulb (2),
- the contact rod (10) serves as a terminal for the light bulb (2), in the form of a plug-in connector at the underside of the lamp base (15),
- connector parts (11, 12) extend below the drive wheel (9), connected on the one hand to the electric motor (8) and on the other hand to the contact bar (7) and to the contact rod (10),
characterised in that
- the bush (19) has a sickle shaped clearance (22) which surrounds the contact rod (10) and in which an arcuate extension (21) of the first connector part (11) is arranged with clamping action,
- the bush (19) has a slot (20) which adjoins the sickle shaped clearance (22) and through which the first connector part (11) is guided to the outside.

2. Warning light according to claim 1, characterised in that the sickle shaped clearance (22) is enlarged to the shape of an annulus.

3. Warning light according to claim 1, characterised in that the first connector part (11) has a cut out (18) in the region of the arcuate extension (21).

4. Warning light according to claim 1, characterised in that the first connector part (11) has a flat connection plug at the side remote from the extension (21).

5. Warning light according to claim 1, characterised in that the second connector part (12) has a cut out (27) to receive an end of the contact bar (7).

6. Warning light according to claim 1, characterised in that the second connector part (12) has an especially doubled flat plug region (23).

7. Warning light according to claim 1, characterised in that the second connector part (12) has a U-shaped region (24) which embraces the bush (19) in the region of the receptor device (13).

8. Warning light according to claim 7, characterised in that the second connector part (12) has a bore (25), the contact rod (10) being pushed through it so as to be insulated.

9. Warning light according to claim 7, characterised in that the second connector part (12) has tabs (26) that are set outwards.

## Revendications

1. Feu de détresse pour véhicules présentant les caractéristiques suivantes :
- le feu de détresse présente un couvercle de recouvrement (1) translucide qui est posé sur le socle de lampe (15),
- le socle de lampe (15) présente sur sa face inférieure un dispositif de réception (13) central destiné à être rapporté sur un support tubulaire,
- à l'intérieur du couvercle de recouvrement (1) translucide, un réflecteur (3) est agencé autour d'une lampe à incandescence (2),
- le réflecteur (3) est relié à la roue de commande (9) d'une transmission accouplée à un moteur électrique (8), et monté en rotation autour d'une douille (19),
- une barre de contact (7) et une fiche de contact (10) s'étendent à travers la douille (19) jusqu'à la lampe à incandescence (2),
- sur la face inférieure du socle de lampe (15), la fiche de contact (10) sert de prise de branchement pour un pôle de la lampe à incandescence (2),
- au-dessous de la roue de commande (9) s'étendent des pièces de raccordement (11, 12) qui sont reliées d'une part au moteur électrique (8) et d'autre part à la barre de contact (7) et à la fiche de contact (10),
caractérisé en ce que
- la douille (19) présente un dégagement (22) en forme de faucille qui entoure la fiche de contact (10) et dans lequel un prolongement (21) en forme d'arc de cercle de la première pièce de raccordement (11) est agencé par serrage,
- la douille (19) présente une fente (20) qui se raccorde au dégagement (22) en forme de faucille et à travers laquelle la première pièce de raccordement (11) est passée jusqu'à l'extérieur.

2. Feu de détresse selon la revendication 1, caractérisé en ce que le dégagement (22) en forme de faucille est évasé en forme d'anneau circulaire.

3. Feu de détresse selon la revendication 1, caractérisé en ce que la première pièce de raccordement (11) présente un évidement (18) dans la région du prolongement (21) en forme d'arc de cercle.

4. Feu de détresse selon la revendication 1, caractérisé en ce que la première pièce de raccordement (11) présente une fiche plate sur la face détournée vis-à-vis du prolongement (21).

5. Feu de détresse selon la revendication 1, caractérisé en ce que la seconde pièce de raccordement (12) présente un évidement (27) pour recevoir une extrémité de la barre de contact (7).

6. Feu de détresse selon la revendication 1, caractérisé en ce que la seconde pièce de raccordement (12) présente une région de fiche plate (23) en particulier doublée.

7. Feu de détresse selon la revendication 1, caractérisé en ce que la seconde pièce de raccordement (12) présente une région en forme de U qui entoure la douille (19) dans la région du dispositif de réception (13).

8. Feu de détresse selon la revendication 7, caractérisé en ce que la seconde pièce de raccordement (12) présente un perçage (25) à travers lequel la fiche de contact (10) est enfichée de manière isolée.

9. Feu de détresse selon la revendication 7, caractérisé en ce que la seconde pièce de raccordement (12) présente des pattes (26) redressées.
